(19) Europäisches Patentamt
European Patent Office
Office européen des brevets

(11) **EP 4 400 539 A1**

(12) **EUROPEAN PATENT APPLICATION**
published in accordance with Art. 153(4) EPC

(43) Date of publication:
**17.07.2024 Bulletin 2024/29**

(21) Application number: **22883264.8**

(22) Date of filing: **13.09.2022**

(51) International Patent Classification (IPC):
**C08J 9/18** (2006.01)    **B29C 44/00** (2006.01)

(52) Cooperative Patent Classification (CPC):
**B29B 17/00; B29C 44/00; C08J 9/18;** Y02W 30/62

(86) International application number:
**PCT/JP2022/034282**

(87) International publication number:
**WO 2023/067954 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.10.2021 JP 2021172503**

(71) Applicant: **JSP Corporation**
**Tokyo 100-0005 (JP)**

(72) Inventors:
• **HIRA Akinobu**
**Yokkaichi-shi, Mie 510-0881 (JP)**
• **NOHARA Tokunobu**
**Yokkaichi-shi, Mie 510-0881 (JP)**
• **HAYASHI Tatsuya**
**Yokkaichi-shi, Mie 510-0881 (JP)**

(74) Representative: **Kramer Barske Schmidtchen**
**Patentanwälte PartG mbB**
**European Patent Attorneys**
**Landsberger Strasse 300**
**80687 München (DE)**

(54) **POLYETHYLENE RESIN FOAM PARTICLES, AND METHOD FOR PRODUCING SAME**

(57) Disclosed herein are a polyethylene-based resin expanded bead containing, as a base resin, a mixed resin of virgin polyethylene (A) and recycled polyethylene (B) and a method for producing the same. The mixed resin contains the virgin polyethylene (A) and the recycled polyethylene (B) in a predetermined ratio. The virgin polyethylene (A) is linear low-density polyethylene (A1) obtained by polymerization using a metallocene-based polymerization catalyst and having predetermined physical properties. The recycled polyethylene (B) is a post-consumer material containing linear low-density polyethylene (B1) and low-density polyethylene (B2) and containing the linear low-density polyethylene (B 1) as a main component.

FIG. 1

EP 4 400 539 A1

**Description**

TECHNICAL FIELD

The present disclosure relates to a polyethylene-based resin expanded bead using, as a base resin, a mixed resin containing a post-consumer material.

BACKGROUND ART

Polyethylene-based resin expanded beads molded articles are excellent in formability and shock absorbability and are thus widely used as shock-absorbing packing materials. Polyethylene-based resin expanded beads molded articles are suitable particularly for electric/electronic device packing materials because they have a property of being less likely to scratch objects to be packaged. Such an expanded beads molded article is obtained by, for example, in-mold molding in which polyethylene-based resin expanded beads are secondarily expanded in a mold while being fusion-bonded together by melting their surfaces.

As for polyethylene-based resin expanded beads, non-crosslinked resin expanded beads including linear low-density polyethylene as a base resin have been considered for use because expanded beads that can be subjected to in-mold molding even when non-crosslinked are easily obtained. Further, from the viewpoint of reducing environmental load, an inorganic physical blowing agent such as carbon dioxide is sometimes used as a blowing agent (see Patent Literatures 1 and 2).

In recent years, from the viewpoint of reducing environmental load, the use of recycled materials has been considered. Among them, post-consumer (hereinafter sometimes referred to as "PCR") materials have received attention which are obtained by recycling raw materials collected from discarded used products and the like. A method for producing an expanded beads molded article using a recycled material has been developed in which an expanded beads molded article is produced from pre-expanded beads using a mixed resin of a waste polyolefin-based resin obtained from waste foamed polyolefin-based resin molded articles and a virgin polyolefin (see Patent Literature 3).

PRIOR ART LITERATURES

Patent Literatures

Patent Literature 1: WO 2013/031745 A1
Patent Literature 2: WO 2014/042189 A1
Patent Literature 3: JP-A-2005-297464

SUMMARY OF INVENTION

PROBLEMS TO BE SOLVED BY INVENTION

However, polyethylene-based resins derived from PCR materials have problems of deterioration of resin materials themselves and stability of quality, and therefore when PCR materials are used, it is difficult to obtain polyethylene-based resin expanded beads with which excellent expanded beads molded articles can be produced. Further, PCR materials may contain various additives in addition to polyethylene-based resins. Such PCR materials containing additives may affect characteristics, such as fusion bondability, of expanded beads. For this reason, it is difficult to produce excellent polyethylene-based resin expanded beads when PCR materials are used. Further, when an inorganic physical blowing agent is used, it is particularly difficult to produce excellent polyethylene-based resin expanded beads. Such a problem becomes conspicuous particularly when a PCR material is added in a relatively large amount.

In light of such circumstances, it is an object of the present invention to provide a polyethylene-based resin expanded bead with which an expanded beads molded article containing a PCR material but having excellent surface smoothness can be produced by in-mold molding under excellent molding conditions and a method for producing the same.

MEANS FOR SOLVING PROBLEM

One aspect of the present invention is a polyethylene-based resin expanded bead containing, as a base resin, a mixed resin of virgin polyethylene (A) and recycled polyethylene (B), wherein

the mixed resin contains 40 wt% or more and 90 wt% or less of the virgin polyethylene (A) and 10 wt% or more and 60 wt% or less of the recycled polyethylene (B) (provided that a total content of both is 100 wt%),

the virgin polyethylene (A) is linear low-density polyethylene (A1) obtained by polymerization using a metallocene-based polymerization catalyst and having a density of 0.915 g/cm$^3$ or more and less than 0.930 g/cm$^3$ and a melting point of 120°C or higher and 130°C or lower, and

the recycled polyethylene (B) is a post-consumer material containing linear low-density polyethylene (B 1) and low-density polyethylene (B2), the linear low-density polyethylene (B1) being contained as a main component.

Another aspect of the present invention is a method for producing a polyethylene-based resin expanded bead, the method including:

a dispersing step in which polyethylene-based resin particles containing, as a base resin, a mixed resin containing 40 wt% or more and 90 wt% or less of virgin polyethylene (A) and 10 wt% or more and 60 wt% or less of recycled polyethylene (B) (provided that a total content of both is 100 wt%) are dispersed in a dispersion medium in a sealed container;

a blowing agent impregnating step in which the resin particles are impregnated with an inorganic physical blowing agent in the sealed container; and

an expanding step in which the resin particles impregnated with the blowing agent are released from the sealed container into an atmosphere having a pressure lower than an internal pressure of the sealed container to expand the resin particles, wherein

the virgin polyethylene (A) is linear low-density polyethylene (A1) obtained by polymerization using a metallocene-based polymerization catalyst and having a density of 0.915 g/cm$^3$ or more and less than 0.930 g/cm$^3$ and a melting point of 120°C or higher and 130°C or lower, and

the recycled polyethylene (B) is a post-consumer material containing linear low-density polyethylene (B1) and low-density polyethylene (B2), the linear low-density polyethylene (B1) being contained as a main component.

EFFECTS OF INVENTION

The polyethylene-based resin expanded bead makes it possible to produce an expanded beads molded article containing a post-consumer material (i.e., a PCR material) but having excellent surface smoothness by in-mold molding under excellent molding conditions (e.g., at a low molding heating temperature). Further, even when an inorganic physical blowing agent is used as a blowing agent, it is possible to stably produce an expanded bead with which such an expanded beads molded article as described above can be produced.

BRIEF DESCRIPTION OF DRAWINGS

Fig. 1 is an explanatory diagram showing an example of a second DSC curve of linear low-density polyethylene.
Fig. 2 is an explanatory diagram showing a method for calculating the area of a high-temperature peak of expanded beads.

MODE FOR CARRYING OUT INVENTION

When an expression "X to Y" is herein used to express a numerical range by interposing "to" between numerical values or physical property values, the expression means "X or more and Y or less", and values of the end points X and Y are included in the numerical range. Further, when a numerical value or a physical property value is expressed as a lower limit, a value equal to or more than the numerical value or the physical property value is meant, and when a numerical value or a physical property value is expressed as an upper limit, a value equal to or less than the numerical value or the physical property value is meant. Further, "wt%" and "mass%" have substantially the same meaning, and "part(s) by weight" and "part(s) by mass" have substantially the same meaning. Herein, a polyethylene-based resin expanded bead is sometimes referred to as an "expanded bead", and an expanded beads molded article is sometimes referred to as a "molded article". The "polyethylene" refers to polyethylene containing 50 mol% or more of a component derived from an ethylene.

An expanded bead according to the present disclosure uses, as a base resin, a mixed resin obtained by mixing virgin polyethylene (A) and recycled polyethylene (B) in a predetermined ratio. Specifically, the mixed resin contains 40 wt% or more and 90 wt% or less of the virgin polyethylene (A) with respect to 100wt% of the total of the virgin polyethylene (A) and the recycled polyethylene (B). In other words, the mixed resin contains 40 wt% to 90 wt% of the virgin polyethylene (A) and 10 wt% to 60 wt% of the recycled polyethylene (B) with respect to 100wt% of the total of the virgin polyethylene (A) and the recycled polyethylene (B).

The expanded bead can be subjected to in-mold molding at a low molding heating temperature to produce a molded article having excellent surface smoothness even when the mixed resin contains the recycled polyethylene (B) in a relatively large amount (e.g., 10 wt% or more and 60 wt% or less). Therefore, an excellent recycling effect can be exhibited. If the content of the virgin polyethylene (A) exceeds 90 wt%, the content of the recycled polyethylene (B) is relatively less than 10 wt%. In this case, the amount of the recycled polyethylene used for production is small, and therefore a recycling effect is poor. From the viewpoint of improving a recycling effect, the content of the recycled polyethylene (B) is preferably 15 wt% or more, more preferably 20 wt% or more, even more preferably 30 wt% or more, particularly preferably 40 wt% or more with respect to 100wt% of the total of the virgin polyethylene (A) and the recycled polyethylene (B). On the other hand, if the content of the virgin polyethylene (A) is less than 40 wt%, the content of the recycled polyethylene (B) relatively exceeds 60 wt%. In this case, the content of polyethylene that has deteriorated or changed in quality during the process of use as a product or regeneration treatment is too large, and therefore moldability of the expanded beads in in-mold molding and surface smoothness of a resulting molded article may be poor. From the viewpoint of further improving moldability and surface smoothness, the content of the virgin polyethylene (A) is preferably 45 wt% or more, more preferably 50 wt% or more with respect to 100wt% of the total of the virgin polyethylene (A) and the recycled polyethylene (B).

From the viewpoint of further improving a recycling effect and the viewpoint of further improving the moldability of the expanded bead and the surface smoothness of a resulting molded article, the content of the virgin polyethylene (A) in the mixed resin is preferably 45% or more and 85% or less, the content of the recycled polyethylene (B) in the mixed resin is preferably 15% or more and 55% or less, the content of the virgin polyethylene (A) in the mixed resin is more preferably 50% or more and 80% or less, and the content of the recycled polyethylene (B) in the mixed resin is more preferably 20% or more and 50% or less.

The virgin polyethylene (A) is linear low-density polyethylene (A1) having predetermined physical properties (specifically, density, molding point) and obtained by polymerization using a metallocene-based polymerization catalyst, and the recycled polyethylene (B) is a PCR material containing linear low-density polyethylene (B 1) and low-density polyethylene (B2) and containing the linear low-density polyethylene (B1) as a main component. Such an expanded bead makes it possible to produce an expanded beads molded article containing a PCR material in such a large amount as described above but having excellent surface smoothness by in-mold molding at a low molding heating temperature.

The "virgin polyethylene" herein refers to so-called virgin polyethylene, that is, fresh polyethylene excluding a recycled material. The virgin polyethylene (A) is constituted from linear low-density polyethylene (A1). The linear low-density polyethylene (A1) is a linear copolymer of ethylene and an $\alpha$-olefin. The $\alpha$-olefin constituting the copolymer usually has 4 to 10 carbon atoms. The linear low-density polyethylene (A1) is preferably a copolymer of ethylene and an $\alpha$-olefin having 6 to 8 carbon atoms, more preferably a copolymer of ethylene and an $\alpha$-olefin having 6 carbon atoms. In this case, the density and melting point of the linear low-density polyethylene are easily adjusted to fall within their respective ranges specified in the present disclosure.

Preferred examples of the linear low-density polyethylene (A1) include an ethylene-1-butene copolymer, an ethylene-1-pentene copolymer, an ethylene-1-hexene copolymer, an ethylene-4-methyl-1-pentene copolymer, and an ethylene-1-octene copolymer. It should be noted that a different monomer(s) from ethylene and the $\alpha$-olefin having 4 to 10 carbon atoms may further be copolymerized as a copolymer component of the linear low-density polyethylene without impairing the object and effects of the present disclosure, and the content of the different monomer(s) is preferably 5 mass% or less, more preferably 3 mass% or less, even more preferably 0 with respect to 100 mass% in total of ethylene, the $\alpha$-olefin having 4 to 10 carbon atoms, and the different monomer(s). The linear low-density polyethylene is preferably a random copolymer or a block copolymer, more preferably a random copolymer.

The virgin polyethylene (A) may contain one type of linear low-density polyethylene (A1) or may contain two or more types of linear low-density polyethylenes (A1).

From the viewpoint of improving recyclability, the linear low-density polyethylene (A1) is preferably non-crosslinked. That is, when the linear low-density polyethylene (A1) is non-crosslinked, a polyethylene-based resin is easily recycled from the expanded beads according to the present disclosure and molded articles obtained by in-mold molding of the expanded beads.

The "non-crosslinked" herein means that the content of insoluble matter obtained by a hot xylene extraction method in the expanded beads is 5 mass% or less. From the viewpoint of further facilitating recycling of the expanded beads and the viewpoint of further improving the flexibility of a resulting expanded beads molded article, the content of insoluble matter obtained by the hot xylene extraction method in the expanded beads is preferably 3 mass% or less, most preferably 0 with respect to the mass of the expanded beads.

The content of xylene-insoluble matter obtained by the hot xylene extraction method (i.e., the content of insoluble matter obtained by the hot xylene extraction method) in the expanded beads is determined by the following method. First, about 1 g of the expanded beads precisely weighed (the precise weight is defined as L (g)) are placed in a 150 mL-round-bottom flask, 100 mL of xylene is added, and a resultant is heated to reflux by a mantle heater for 6 hours to obtain a xylene solution containing insoluble matter. Then, the xylene solution containing insoluble matter is filtered through a 100-mesh metallic mesh to obtain the insoluble matter. The insoluble matter is dried in a vacuum dryer at 80°C for 8 hours or longer, and a weight M (g) of the dried insoluble matter is measured. The content (mass%) of the insoluble matter obtained by the hot xylene extraction method is determined by the following formula (1) from the weight L (g) of the expanded beads precisely weighed and the dry weight M (g) of the insoluble matter. It should be noted that the filtration of the xylene solution containing insoluble matter is preferably performed quickly using a metallic mesh.

$$\text{Content (mass\%) of insoluble matter obtained by hot xylene extraction method} = (M/L) \times 100 \qquad (1)$$

The virgin polyethylene (A) (specifically, the linear low-density polyethylene (A1)) is obtained by polymerization using a metallocene-based polymerization catalyst and has a density of 0.915 $g/cm^3$ or more and less than 0.930 $g/cm^3$ and a melting point of 120°C or higher and 130°C or lower. The expanded bead uses, as a base resin, a mixed resin of such virgin polyethylene (A) and specific recycled polyethylene (B) and therefore makes it possible to produce a molded article containing recycled polyethylene (specifically, a PCR material) but having excellent surface smoothness by molding under excellent molding conditions. It should be noted that excellent moldability herein means that a molded article having excellent fusion bondability, secondary expandability, and shape recoverability after molding can be produced by molding under excellent molding conditions. The "excellent molding conditions" means that a molding heating temperature is low (specifically, a molding pressure is low). Further, it is preferred that in in-mold molding, molding can be performed in a wide range of molding heating temperatures (specifically, at a plurality of molding pressures).

The virgin polyethylene (A) has a density of 0.915 $g/cm^3$ or more and less than 0.930 $g/cm^3$. If the density of the virgin polyethylene (A) is less than 0.915 $g/cm^3$, a resulting molded article is likely to shrink or deform just after taken out of a mold, which may make it difficult to produce an excellent molded article by molding. From the viewpoint of further improving moldability, the density of the virgin polyethylene (A) is preferably 0.918 $g/cm^3$ or more, more preferably 0.920 $g/cm^3$ or more. On the other hand, if the density of the virgin polyethylene (A) is 0.930 $g/cm^3$ or more, the molding heating temperature may become high. Further, flexibility of a resulting molded article deteriorates, which may result in a shortage of shock absorbability depending on the intended use of the molded article. From the viewpoint of further improving moldability and flexibility, the density of the virgin polyethylene (A) is preferably 0.928 $g/cm^3$ or less, more preferably 0.925 $g/cm^3$ or less.

From the viewpoint of further improving the moldability of the expanded bead and the viewpoint of improving the flexibility of a resulting molded article, the density of the virgin polyethylene (A) is preferably 0.918 $g/cm^3$ or more and 0.928 $g/cm^3$ or less, more preferably 0.920 $g/cm^3$ or more and 0.925 $g/cm^3$ or less.

The density of the virgin polyethylene (A) is measured by, for example, Method B (Pycnometer method) described in JIS K7112:1999.

The virgin polyethylene (A) has a melting point of 120°C or higher and 130°C or lower. If the melting point of the virgin polyethylene (A) is lower than 120°C, moldability deteriorates so that molding becomes difficult. Specifically, a resulting molded article is likely to shrink or deform just after taken out of a mold and shape recoverability deteriorates. From the viewpoint of further improving moldability, the melting point of the virgin polyethylene (A) is preferably 121°C or higher, more preferably 122°C or higher. If the melting point of the virgin polyethylene (A) exceeds 130°C, fusion bondability deteriorates in molding at a low molding temperature so that moldability deteriorates. From the viewpoint of further improving moldability, the melting point of the virgin polyethylene (A) is preferably 128°C or lower, more preferably 125°C or lower.

From the viewpoint of further improving the moldability of the expanded bead, the melting point of the virgin polyethylene (A) is preferably 121°C or higher and 128°C or lower, more preferably 122°C or higher and 125°C or lower.

The melting point of the virgin polyethylene (A) is measured by, for example, a testing method for transition temperature of plastic specified in JIS K7121:1987. First, in accordance with "(2) Case where a melting temperature is measured after certain heat treatment is performed", a test specimen is conditioned by heating from 30°C to 200°C at a heating rate of 10°C/min and then cooling to 30°C at a cooling rate of 10°C/min. Then, differential scanning calorimetry is performed by heating from 30°C to 200°C at a heating rate of 10°C/min to obtain a DSC curve. The peak temperature of an endothermic peak in the obtained DSC curve is defined as a melting point. It should be noted that when a plurality of endothermic peaks appear in the DSC curve, the peak temperature of the endothermic peak having the highest peak height is defined as a melting point.

The virgin polyethylene (A) is linear low-density polyethylene obtained by polymerization using a metallocene-based polymerization catalyst. Linear low-density polyethylene obtained by polymerization using a metallocene-based polymerization catalyst is superior in elongation during molding to linear low-density polyethylene obtained by polymerization using a Ziegler-Natta catalyst and having comparable density and melting point, and tends to have improved moldability under low-pressure conditions. Therefore, the use of linear low-density polyethylene (A1) obtained by polymerization using a metallocene-based polymerization catalyst as the virgin polyethylene (A) makes it possible to produce a molded article containing a PCR material in such a large amount as described above but having excellent surface smoothness by molding under excellent molding conditions. On the other hand, if the expanded bead uses, as a base resin, a mixed resin of virgin polyethylene constituted from linear low-density polyethylene obtained by polymerization using a Ziegler-Natta catalyst and recycled polyethylene, moldability and surface smoothness may deteriorate. Further, flexibility of a resulting molded article may deteriorate.

From the viewpoint of further improving the moldability of the expanded bead in in-mold molding and the flexibility of a resulting molded article, the heat of fusion ΔH1 of the virgin polyethylene (A) (specifically, the linear low-density polyethylene (A1)) is preferably 80 J/g or more and 100 J/g or less, more preferably 80 J/g or more and 95 J/g or less, even more preferably 82 J/g or more and 90 J/g or less.

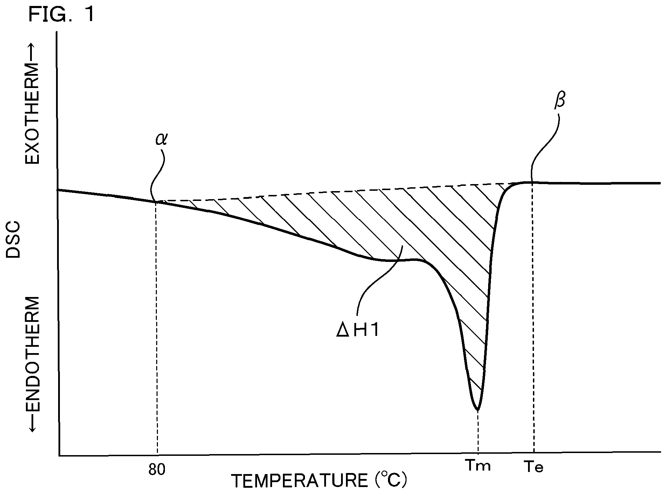

The heat of fusion ΔH1 of the virgin polyethylene (A) is measured on the basis of, for example, JIS K7122:2012 using a heat-flux differential scanning calorimeter. First, in accordance with "Case where heat of fusion is measured after certain heat treatment is performed", a test specimen is conditioned at a heating rate of 10°C/min and a cooling rate of 10°C/min. Then, heat-flux DSC (i.e., differential scanning calorimetry) is performed by setting a heating rate to 10°C/min to obtain a DSC curve. The value of heat of fusion can be determined on the basis of the obtained DSC curve. When a plurality of melting peaks appear in the DSC curve, the total of areas of the melting peaks is defined as heat of fusion. An example of DSC curve of the virgin polyethylene (A) is shown in Fig. 1. As shown in Fig. 1, the heat of fusion is represented by the area of a region (a shaded area in Fig. 1) surrounded by the DSC curve and a straight line drawn to connect a point α at 80°C on the DSC curve to a point β at a melting end temperature Te on the DSC curve.

From the viewpoint of further improving second expandability to further improve surface smoothness and the viewpoint of further increasing a closed cell content to further improve moldability, the melt flow rate (i.e., MFR) of the virgin polyethylene (A) is preferably 0.8 g/10 min or more and 1.5 g/10 min or less, more preferably 0.9 g/10 min or more and 1.4 g/10 min or less, even more preferably 1.0 g/10 min or more and 1.3 g/10 min or less.

The MFR of the virgin polyethylene (A) is measured under conditions of a temperature of 190°C and a load of 2.16 kg in accordance with JIS K7210-1:2014.

When a metallocene-based polymerization catalyst is used as a polymerization catalyst of the linear low-density polyethylene (A1), the density, heat of fusion, melting point, and MFR of the virgin polyethylene (A) are easily adjusted to fall within their respective ranges described above. The density, the heat of fusion, the melting point, and the MFR can be controlled by changing the type of α-olefin constituting the copolymer (specifically, the linear low-density polyethylene (A1)), the content of the α-olefin, and the molecular weight and molecular weight distribution of the copolymer.

The recycled polyethylene (B) is a PCR material (post-consumer material). The post-consumer material refers to a PCR material described in JIS Q14021:2000. Specifically, the PCR material is a material discarded from households or a material generated from products that can no longer be used for their original purposes in commercial facilities, industrial plants, and other various facilities as product end-users and includes a material returned from distribution channels. That is, the PCR material is a material recycled from materials or products (used materials or used products) discarded after once put on the market.

The recycled polyethylene (B) contains linear low-density polyethylene (B1) and low-density polyethylene (B2) and contains the linear low-density polyethylene (B1) as a main component. Specifically, the recycled polyethylene (B) contains 50 mass% or more of the linear low-density polyethylene (B1) with respect to 100wt% of the total of the linear low-density polyethylene (B1) and the low-density polyethylene (B2). Since the recycled polyethylene contains not only the linear low-density polyethylene (B1) but also the low-density polyethylene (B2), a molded article containing the recycled polyethylene (B) recovered from waste but having excellent surface smoothness can be produced by in-mold molding of the expanded beads at a low temperature (specifically, at a low pressure).

If the recycled polyethylene (B) does not contain the low-density polyethylene (B2), elongation at low temperature deteriorates, so that it may be difficult to produce an excellent molded article by molding. On the other hand, if the content of the low-density polyethylene (B2) in the recycled polyethylene (B) is as large as more than 50 wt%, surface smoothness of a resulting molded article may deteriorate or molding may be difficult because a resulting molded article is likely to shrink or deform just after taken out of a mold.

The content of the linear low-density polyethylene (B1) is preferably 50 wt% or more and 90 wt% or less with respect to 100wt% of the total of the linear low-density polyethylene (B1) and the low-density polyethylene (B2). In other words, the recycled polyethylene (B) preferably contains 50 wt% or more and 90 wt% or less of the linear low-density polyethylene (B1) and 10 wt% or more and 50 wt% or less of the low-density polyethylene (B2) with respect to 100wt% of the total of the linear low-density polyethylene (B1) and the low-density polyethylene (B2). In this case, molding can be performed at a lower temperature while a moldable temperature range becomes wide, and surface smoothness of a resulting molded article further improves. From the viewpoint of further improving such effects, the recycled polyethylene (B) more preferably contains 50 wt% or more and 80 wt% or less of the linear low-density polyethylene (B1) and 20 wt% or more and 50 wt% or less of the low-density polyethylene (B2) and even more preferably contains 50 wt% or more and 70 wt% or less of the linear low-density polyethylene (B1) and 30 wt% or more and 50 wt% or more of the low-density polyethylene (B2) with respect to 100wt% of the total of the linear low-density polyethylene (B1) and the low-density polyethylene (B2).

Examples of the linear low-density polyethylene (B1) are the same as examples of the linear low-density polyethylene (A1). The linear low-density polyethylene (B1) is preferably non-crosslinked.

The low-density polyethylene (B2) is preferably polyethylene having a branched structure and a density of 910 kg/m$^3$ or more and less than 930 kg/m$^3$. The low-density polyethylene (B2) is preferably non-crosslinked.

The recycled polyethylene (B) may contain different polymer(s) other than the linear low-density polyethylene (B 1) and the low-density polyethylene (B2) without impairing the object and effects of the present disclosure. The content of different polymer(s) in the recycled polyethylene (B) is preferably 10 mass% or less, more preferably 5 mass% or less, even more preferably 3 mass% or less, particularly preferably 0. That is, it is particularly preferred that the recycled polyethylene (B) substantially contains only the linear low-density polyethylene (B 1) and the low-density polyethylene (B2) as polymers.

As the recycled polyethylene (B), various PCR materials may be used without impairing the object and effects of the present disclosure. Specific examples of materials or products from which PCR materials are derived include films, sheets, and boards. Further, foamed products and non-foamed products may be included. Among them, recycled polyethylene recovered from discarded non-foamed films is preferred. In this case, for example, from polyethylene films discarded after used as packing materials or the like, recycled polyethylene containing linear low-density polyethylene (B1) and low-density polyethylene (B2) and containing the linear low-density polyethylene (B1) as a main component is easily obtained. Further, most of polyethylene films used as packing materials or the like contain no coloring agent, and are therefore less likely to affect the colors of foamed products using recycled polyethylene recovered from such waste. Further, polyethylene films for packing are discarded in large amounts, and therefore recycling of them can easily contribute to reducing environmental load. Also from the viewpoint that the physical properties of polyethylene required of films are relatively close to the physical properties of polyethylene required of expanded beads, the recycled polyethylene (B) is preferably recovered from films.

It should be noted that the "film" herein refers to one mainly containing a film-shaped polymer material having a thickness of less than 250 $\mu$m.

Polyethylene films usually contain additives such as a lubricant, an anti-blocking agent, and an antioxidant. Specific examples of the lubricant include: fatty acid amides such as stearic acid amide and erucamide; fatty acid esters such as glycerin monostearate; and fatty acid metal salts such as calcium stearate and magnesium stearate. Specific examples of the anti-blocking agent include silica, talc, and zeolite. Examples of the antioxidant include: hindered phenol-based antioxidants such as octadecyl-3-(3,5-di-tert-butyl-4-hydroxyphenyl)propionate, stearyl-3-(3,5-di-tert-butyl-4-hydroxyphenyl)propionate, and pentaerythritol tetrakis[3-(3',5'-di-tert-butyl-4'-hydroxyphenyl)propionate]; and phosphite-based antioxidants such as tris(2,4-tert-butylphenyl)phosphite. Therefore, whether or not the recycled polyethylene (B) is recovered from films can be estimated by, for example, detecting such additives by gas chromatograph mass spectrometry (GC/MS), field desorption/ionization mass spectrometry (FD/MS), liquid chromatography analysis (HPLC), and the like.

A method for producing a PCR material from discarded used polyethylene films may be a conventionally-known method. Specifically, first, discarded polyethylene films are pulverized, supplied to an extruder, and heat-kneaded to obtain a melted resin. Then, the melted resin is extruded into water and cut to obtain pellets of recycled polyethylene (B).

Generally, recycled polyethylene recovered from polyethylene films discarded after used as packing materials or the like has undergone at least two heat histories resulting from melt-kneading. Further, unlike in-process recycled materials (specifically, recycled polyethylene generated in the process of manufacturing products), recycled polyethylene recovered from a PCR material and obtained through collection/regeneration treatment greatly varies in quality because products before recycling have been contaminated or deteriorated in their usage environments. Therefore, it is conventionally difficult to obtain expanded beads and molded articles having stable quality even when expanded beads and molded articles are produced using recycled polyethylene. However, according to the present disclosure, the combined use of predetermined virgin polyethylene (A) and predetermined recycled polyethylene (B) makes it possible to obtain an expanded bead capable of producing a molded article having excellent surface smoothness at a low molding heating temperature even when a large amount of the recycled polyethylene (B) is used. The thus obtained expanded bead and molded article have stable quality.

The melting point of the recycled polyethylene (B) is preferably 115°C or higher and 130°C or lower. In this case, it is possible to further improve the production stability and moldability of the expanded bead. From the viewpoint of further improving this effect, the melting point of the recycled polyethylene (B) is more preferably 118°C or higher and 128°C or lower, even more preferably 120°C or higher and 125°C or lower.

The density of the recycled polyethylene (B) is preferably 0.910 g/cm$^3$ or more and less than 0.930 g/cm$^3$. In this case, it is possible to further improve the production stability and moldability of the expanded bead. From the viewpoint of further improving this effect, the density of the recycled polyethylene (B) is more preferably 0.915 g/cm$^3$ or more and 0.928 g/cm$^3$ or less, even more preferably 0.920 g/cm$^3$ or more and 0.925 g/cm$^3$ or less.

The MFR of the recycled polyethylene (B) is preferably 0.8 g/10 min or more and 2.5 g/10 min or less. In this case, it is possible to further improve the production stability and moldability of the expanded bead. From the viewpoint of further improving this effect, the MFR of the recycled polyethylene (B) is more preferably 0.9 g/10 min or more and 2.0 g/10 min or less, even more preferably 1.0 g/10 min or more and 1.8 g/10 min or less.

The difference [(Ir - Iv)] between the MFR (Iv) of the virgin polyethylene (A) and the MFR (Ir) of the recycled polyethylene (B) is preferably -1.2 to 1.2 g/10 min, more preferably -1.0 to 1.0 g/10 min, even more preferably -0.8 to 0.8 g/10 min. In this case, it is possible to more reliably improve the moldability of the expanded bead.

Further, from the viewpoint of widening a moldable heating temperature range (specifically, a molding pressure range) of in-mold molding, the difference [(Ir - Iv)] between the MFR (Iv) of the virgin polyethylene (A) and the MFR (Ir) of the recycled polyethylene (B) is particularly preferably -0.5 to 0.5 g/10 min.

The melting point, density, and MFR of the recycled polyethylene (B) can be measured in the same manner as described above with reference to the virgin polyethylene (A). When a PCR material recovered from, for example, discarded films is used as recycled polyethylene (B), recycled polyethylene (B) having a melting point, a density, and a MFR within the above-described ranges can easily be obtained.

The expanded bead may contain different polymer(s) from the virgin polyethylene (A) and the recycled polyethylene (B) without impairing the object and effects of the present disclosure. Examples of different polymer(s) include: polyethylene-based resins other than polyethylenes exemplified above in the description of the virgin polyethylene (A) and the recycled polyethylene (B); thermoplastic resins other than polyethylene-based resins, such as polypropylene and polystyrene; and thermoplastic elastomers such as olefin-based thermoplastic elastomers. The content of different polymer(s) in the expanded beads is preferably 10 mass% or less, more preferably 5 mass% or less, even more preferably 3 mass% or less, particularly preferably 0. That is, it is particularly preferred that the expanded bead substantially contains only a mixed resin of the virgin polyethylene (A) and the recycled polyethylene (B) as a polymer. From the viewpoint of obtaining a molded article having excellent flexibility, it is preferred that the expanded bead does not contain high-density polyethylene.

From the viewpoint of improving the fusion bondability of the expanded bead, a cover layer may be formed to cover the surface of the expanded bead. The cover layer is preferably formed of, for example, a polyethylene-based resin having a melting point lower than that of the polyethylene-based resin constituting the expanded bead.

The average cell diameter of the expanded beads is preferably 50 μm or more and 180 μm or less. In this case, moldability in in-mold molding and surface smoothness of a resulting molded article further improve. Further, flexibility of a resulting molded article further improves. From the viewpoint of further improving moldability, the average cell diameter of the expanded beads is preferably 55 μm or more, more preferably 60 μm or more. On the other hand, from the viewpoint of further improving surface smoothness and flexibility, the average cell diameter of the expanded beads is more preferably 160 μm or less, even more preferably 120 μm or less.

From the viewpoint of further improving the moldability of the expanded bead and the viewpoint of further improving the surface smoothness and flexibility of a resulting molded article, the average cell diameter of the expanded beads is preferably 55 μm or more and 160 μm or less, more preferably 60 μm or more and 120 μm or less.

The average cell diameter of the expanded beads is measured, for example, in the following manner. The expanded bead is divided into almost equal halves, and an enlarged photograph of the entire cut surface thereof is taken using a microscope such as a scanning electron microscope. In the enlarged cross-sectional photograph, four line segments are drawn equiangularly (45°) from the outermost surface of the expanded bead to the outermost surface on the opposite side so as to pass through the center, and the number of cells intersecting these line segments is measured. The total length of the four line segments is divided by the total number of cells intersecting the line segments to calculate the cell diameter of the expanded bead. The same operation is performed on 20 expanded beads, and an arithmetic average of cell diameters of the expanded beads is calculated and defined as an average cell diameter.

The expanded bead is produced by, for example, a so-called dispersion medium release expansion method using an inorganic physical blowing agent such as carbon dioxide. It is conventionally known that when an inorganic physical blowing agent is used as a blowing agent in this method, a resulting expanded bead is likely to have a small cell diameter and moldability is likely to deteriorate. The expanded bead according to the present disclosure has excellent moldability even when the average cell diameter is small. This makes it possible to produce a molded article having excellent flexibility and surface smoothness by molding under excellent molding conditions.

The average cell diameter of the expanded beads can be adjusted to fall within the above-described range by, for example, using an inorganic physical blowing agent as a blowing agent in a dispersion medium release expansion method that will be described later. Further, the average cell diameter of the expanded beads can be adjusted to fall within the above-described range by changing the type of a cell controlling agent used, the amount of a cell controlling agent added, an expansion method, the amount of a blowing agent added, an expansion temperature, the presence or absence of a second expanding step, and the conditions of a second expanding step. For example, when the amount of a cell controlling agent added is increased, the number of cells can be increased so that the average cell diameter is reduced. By providing a second expanding step, the average cell diameter can be increased.

From the viewpoint of further improving the moldability of the expanded bead and the physical properties and the like of a resulting molded article, the closed cell content of the expanded beads is preferably 80% or more, more preferably 85% or more, even more preferably 90% or more. It should be noted that the closed cell content of the expanded beads can be measured on the basis of Procedure C of ASTM-D2856-70.

In heat-flux differential scanning calorimetry of the expanded beads, it is preferable that a first DSC curve obtained by heating the expanded bead from 30°C to 200°C at a heating rate of 10°C/min has an intrinsic peak that is a melting peak intrinsic to the base resin and a high-temperature peak that is a melting peak appearing on a higher temperature side in comparison with the intrinsic peak, and a heat of fusion at the high-temperature peak is 10 J/g or more and 50 J/g or less. In this case, moldability of the expanded bead further improves. From the viewpoint of improving this effect, the heat of fusion of the high-temperature peak is more preferably 12 J/g or more and 40 J/g or less, even more preferably 15 J/g or more and 30 J/g or less.

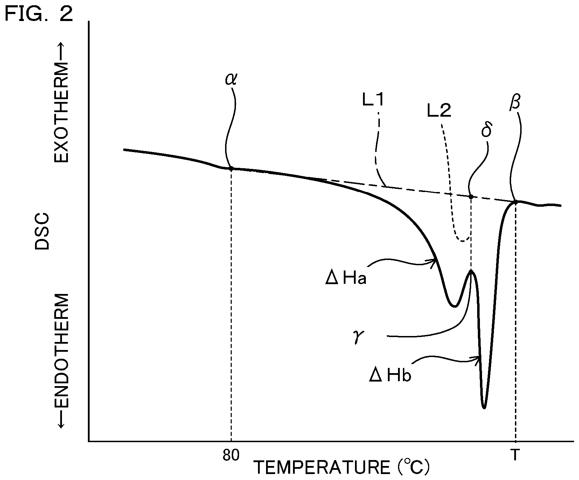

The heat of high temperature peak of the expanded beads is measured on the basis of, for example, JIS K7122:2012 using a heat-flux differential scanning calorimeter. Specifically, the heat of high temperature peak of the expanded beads can be calculated by the following method. First, heat-flux DSC is performed using 1 to 3 mg of expanded beads to obtain a DSC curve. At this time, a measurement start temperature is set to 30°C, a measurement end temperature is set to 200°C, and a heating rate is set to 10°C/min. When the expanded beads have a high-temperature peak, as shown in Fig. 2, an intrinsic peak $\Delta Ha$ and a high-temperature peak $\Delta Hb$, which has a peak on the higher temperature side than the peak of the intrinsic peak $\Delta Ha$, appear in the DSC curve.

Then, a straight line L1 is drawn to connect a point $\alpha$ at 80°C to a point $\beta$ at a melting end temperature T of the expanded beads on the DSC curve. It should be noted that the melting end temperature T is a high temperature-side end point of the high-temperature peak $\Delta Hb$, that is, an intersection between the high-temperature peak $\Delta Hb$ in the DSC curve and a baseline on the higher temperature side than the high-temperature peak $\Delta Hb$.

After the straight line L1 is drawn, a straight line L2 parallel to the vertical axis of the graph is drawn so as to pass through a local maximum point $\gamma$ present between the intrinsic peak $\Delta Ha$ and the high-temperature peak $\Delta Hb$. The intrinsic peak $\Delta Ha$ and the high-temperature peak $\Delta Hb$ are divided by the straight line L2. The endothermic heat of the high-temperature peak $\Delta Hb$ can be calculated on the basis of the area of a region surrounded by the curve of the high-temperature peak $\Delta Hb$ in the DSC curve, the straight line L1, and the straight line L2.

It should be noted that when, after the DSC curve is obtained by the above-described method, the expanded beads are once cooled and then a DSC curve is again obtained, only an intrinsic peak $\Delta Ha$ appears in the DSC curve, that is, a high-temperature peak $\Delta Hb$ disappears from the DSC curve.

The bulk density of the expanded beads is preferably 10 to 50 kg/m$^3$. In this case, the physical properties and lightweight properties of a resulting molded article can be improved in a better-balanced way. From such a viewpoint, the bulk density is more preferably 12 to 40 kg/m$^3$, even more preferably 15 to 30 kg/m$^3$.

The bulk density of the expanded beads can be determined, for example, in the following manner. Expanded beads are randomly selected from a group of expanded beads, and a measuring cylinder having a capacity of 1 L is filled with a large number of the expanded beads up to the 1-liter mark in a natural accumulation state. The bulk density of the expanded beads is determined by dividing a mass W2 [g] of the expanded beads filled in the measuring cylinder by a volume V2 (1 [L]) of the measuring cylinder (W2/V2) and converting the unit to [kg/m$^3$]. Further, the bulk ratio [times] of the expanded beads can be determined by dividing the density [kg/m$^3$] of the base resin constituting the expanded beads by the bulk density [kg/m$^3$].

The expanded bead is produced by a so-called dispersion medium release expansion method (i.e., by a direct expansion method) using an inorganic physical blowing agent. Specifically, the expanded bead is produced by, for example, performing a granulating step, a dispersing step, a blowing agent impregnating step, and an expanding step which will be described below.

The granulating step is a step of producing polyethylene-based resin particles using, as a base resin, a mixed resin obtained by mixing 40 to 90 wt% of virgin polyethylene (A) and 10 to 60 wt% of recycled polyethylene (B) (provided that the total of both of them is taken as 100 wt%). Hereinafter, the polyethylene-based resin particles are sometimes referred to as "resin particles".

The granulating step is performed, for example, in the following manner. First, 40 to 90 parts by weight of virgin polyethylene (A) and 10 to 60 parts by weight of recycled polyethylene (B) are mixed so that the total of both of them is 100 parts by weight to prepare a mixed resin. The mixing is performed, for example, in the following manner. First, 40 to 90 parts by weight of virgin polyethylene (A), 10 to 60 parts by weight of recycled polyethylene (B), and an additive added as necessary are supplied to an extruder and melt-kneaded in the extruder to obtain a mixed resin.

Then, the melt-kneaded mixed resin in the extruder is extruded into a strand through a slit of a die attached to the tip of the extruder, and the extruded strand is cooled by, for example, immersion in water. Then, the extruded strand is cut by a pelletizer so that resin particles have a predetermined weight. In this way, resin particles using the mixed resin as a base resin can be produced (strand-cut method). Alternatively, resin particles may be produced by, after melt-kneading, extruding the melt-kneaded mixed resin under water and cutting the extruded material by a pelletizer just after extrusion so that resin particles have a predetermined weight (underwater cutting method).

The details of the virgin polyethylene (A) and the recycled polyethylene (B) used in the granulating step are as described above. The mixing ratio between the virgin polyethylene (A) and the recycled polyethylene (B) in the granulating step corresponds to the above-described content ratio between the virgin polyethylene (A) and the recycled polyethylene (B) in the mixed resin constituting the expanded bead.

The additive added in the granulating step is, for example, a cell controlling agent. Examples of the cell controlling agent include: inorganic materials such as talc, calcium carbonate, borax, zinc borate, aluminum hydroxide, and silica; and polymers such as polytetrafluoroethylene, polyethylene wax, polycarbonate, and cross-linked polystyrene. Usually, the amount of the cell controlling agent to be added is preferably 0.001 to 5 parts by mass, more preferably 0.005 to 3 parts by mass, even more preferably 0.01 to 2 parts by mass per 100 parts by mass of the total of the virgin polyethylene (A) and the recycled polyethylene (B). If necessary, an additive may further be added to the resin particles, and examples thereof include a crystal nucleating agent, a coloring agent, a flame retarder, a flame retardant aid, a plasticizer, an antistatic agent, an antioxidant, a UV protectant, a light stabilizer, an electroconductive filler, and an antimicrobial agent.

The average weight per particle of the resin particles is preferably 0.2 to 10 mg, more preferably 0.5 to 5 mg. The shape of the individual resin particles is columnar, spherical, prismatic, or oval. The expanded bead has a shape corresponding (specifically, similar) to the shape of the individual resin particles before expansion.

In the dispersing step, the resin particles are dispersed in a dispersion medium in a sealed container. The sealed container may be a pressure-resistant vessel such as an autoclave. The dispersion medium is, for example, a liquid, and is specifically an aqueous medium such as water. A dispersing agent may be added to the dispersion medium. Examples of the dispersing agent include microparticulate aluminum oxide, titanium oxide, basic magnesium carbonate, basic zinc carbonate, calcium carbonate, kaolin, mica, and clay. Such a dispersing agent is usually used in an amount of about 0.001 to 1 part by mass per 100 parts by mass of the resin particles.

When the dispersing agent is used, an anionic surfactant is preferably used as a dispersing aid in combination with the dispersing agent, and examples of the anionic surfactant include sodium dodecylbenzenesulfonate, sodium alkylbenzenesulfonate, sodium lauryl sulfate, and sodium oleate. The amount of the dispersing aid to be added is preferably 0.001 to 1 part by mass per 100 parts by mass of the resin particles.

In the blowing agent impregnating step, the resin particles are impregnated with an inorganic physical blowing agent in the sealed container. Specifically, an inorganic physical blowing agent is charged under pressure into the sealed container, in which the resin particles are dispersed in the dispersion medium, to impregnate the resin particles with the blowing agent under heat and pressure.

The inorganic physical blowing agent may be carbon dioxide, nitrogen, argon, helium, air, or the like. These may be used singly or in combination of two or more of them. From the viewpoint that environmental load can be reduced by preventing ozone layer destruction and the viewpoint of being less expensive, the inorganic physical blowing agent is preferably carbon dioxide, nitrogen, or air, more preferably carbon dioxide. It should be noted that the inorganic physical blowing agent may be used in combination with an organic physical blowing agent, but from the viewpoint of reducing environmental load, the amount of the organic physical blowing agent to be added is preferably 20 mass% or less, more preferably 10 mass% or less, even more preferably 0 (i.e., it is even more preferred that only the inorganic physical blowing agent is used) with respect to 100wt% of the total of the inorganic physical blowing agent and the organic physical blowing agent.

The amount of the blowing agent to be used can appropriately be adjusted depending on a desired bulk density of the expanded beads. Further, the amount of the blowing agent to be used is determined in consideration of the type of linear low-density polyethylene (A1) used and the type of blowing agent to be used. The amount of the blowing agent to be used is usually 0.5 to 30 parts by mass, preferably 1 to 15 parts by mass per 100 parts by mass of the resin particles.

At any of time points of before, during, and after the blowing agent impregnating step, a high-temperature peak forming step is preferably performed in which the dispersion medium, in which the polyethylene-based resin is dispersed, is maintained at a predetermined temperature. In this case, it is possible to easily allow the above-described high-temperature peak to appear. The high-temperature peak forming step is preferably performed after the blowing agent impregnating step. Specifically, the high-temperature peak forming step is performed in the following manner.

The resin particles dispersed in the dispersion medium in the sealed container are heated at a temperature lower than a melting end temperature Te°C of the linear low-density polyethylene (A1) to melt part or most part of the linear low-density polyethylene (A1). Then, the dispersion medium is maintained at a temperature Ta°C that is equal to or higher than a temperature lower by 30°C than a melting point Tm°C of the linear low-density polyethylene (A1) (i.e., Tm - 30°C or higher) and lower than the melting end temperature Te°C for sufficient time (e.g., 1 to 60 minutes) to recrystallize the crystalline portion of the melted linear low-density polyethylene (A1). In this way, it is possible to allow a high-temperature peak to appear.

Alternatively, it is possible to allow a high-temperature peak to appear also by slowly heating the resin particles dispersed in the dispersion medium in the sealed container to a temperature equal to or higher than Tm - 30°C and lower than the melting end temperature Te°C for sufficient time.

It should be noted that such a holding temperature range of Tm - 30°C or higher and lower than Te°C is appropriate when an inorganic physical blowing agent is used as a blowing agent.

In the expanding step, the resin particles impregnated with the blowing agent are released from the sealed container into an atmosphere having a pressure lower than the internal pressure of the sealed container. This makes it possible to expand the resin particles and obtain expanded beads.

Specifically, in the expanding step, the resin particles containing the blowing agent are released together with the dispersion medium from the sealed container into a low-pressure atmosphere at an expansion temperature Tb°C to obtain expanded beads. The expansion temperature Tb is preferably equal to or higher than a temperature lower by 15°C than the melting point Tm of the low-density polyethylene (i.e., Tm - 15°C) and equal to or lower than the melting end temperature.

The magnitude of the above-described heat of high temperature peak can be adjusted by changing conditions such as the holding temperature Ta in the high-temperature peak forming step, a holding time at the holding temperature, and the expansion temperature in the expanding step. For example, the heat of high temperature peak of the expanded beads tends to increase as a holding time at the holding temperature Ta increases. Further, the heat of high temperature peak of the expanded beads tends to increase as the expansion temperature Tb decreases.

It should be noted that the expanded beads obtained in such a manner as described above may be subjected to pressure treatment with air or the like to increase the internal pressure of cells and then expanded by heating with steam or the like (i.e., a second expanding step) to obtain expanded beads (i.e., second-step expanded beads) having a lower apparent density.

The expanded beads are subjected to in-mold molding to obtain an expanded beads molded article. Specifically, the expanded beads are filled in a mold and then heated by introducing a heating medium such as steam into the mold and are, as a result, secondarily expanded and fusion-bonded together, so that a molded article having a shape corresponding to the shape of a molding space is obtained. Examples of a method for producing a molded article include known in-mold molding methods. Specific examples thereof include in-mold molding methods such as a cracking molding method (see, for example, JP S46-38359 B), a pressure molding method (see, for example, JP S51-22951 B), a compression filling molding method (see, for example, JP H04-46217 B), an atmospheric filling molding method (see, for example, JP H06-49795 B), and a combination of two or more of these methods (see, for example, JP H06-22919 B).

In in-mold molding of expanded beads, in order to supplement the expandability (specifically, secondary expandability) of the expanded beads, the expanded beads are often previously subjected to pressure treatment using a pressurized gas such as air before filled into a mold to increase the pressure in the cells of the expanded beads to a predetermined internal pressure, and are then filled into the mold and molded. On the other hand, since the expanded bead according to the present disclosure has excellent expandability and moldability, an excellent molded article can be produced without performing such pressure treatment. Specifically, the internal pressure of the expanded beads filled into the mold is preferably 0.01 MPa (G; gauge pressure) or less, more preferably 0 MPa (G).

The molded article is constituted from a large number of the expanded beads fusion-bonded together. By subjecting the expanded beads according to the present disclosure to in-mold molding, it is possible to obtain a molded article having excellent surface smoothness and a beautiful external appearance.

From the viewpoint of achieving both lightweight properties and stiffness, the density of the molded article is preferably 10 to 50 kg/m$^3$, more preferably 15 to 40 kg/m$^3$, even more preferably 18 to 30 kg/m$^3$.

The density of the molded article is calculated by dividing the weight (g) of the molded article by the volume (L) of the molded article determined from the external dimensions of the molded article and by performing unit conversion. It should be noted that when it is not easy to determine the volume from the external dimensions of the molded article, the volume of the molded article can be determined by a water immersion method.

The product of tensile strength S [unit: MPa] and tensile elongation E [unit: %] of the molded article, S × E [unit: MPa·%], is preferably 8 MPa•% or more. In this case, the molded article can exhibit excellent flexibility. Further, durability of the molded article improves, which makes it possible to suitably use the molded article as, for example, a shock-absorbing material that is repeatedly used. From the viewpoint of further improving flexibility and durability, the product of tensile strength S and tensile elongation E (i.e., S × E) is more preferably 10 MPa·% or more. It should be noted that the upper limit of the product is approximately 50 MPa·%.

The tensile strength S and tensile elongation E of the molded article are measured in accordance with JIS K6767: 1999. To be more specific, firstly, the molded article is cut using a vertical slicer to prepare a cut-out piece of 120 mm × 25 mm × 10 mm having each face constituted by a cut surface. A No. 1 dumbbell test specimen is prepared from the cut-out piece with the use of a jig saw. Then, the test specimen is subjected to a tensile test at a tensile speed of 500 mm/min to determine tensile strength S and tensile elongation E. The thus measured maximum tensile stress under tension and elongation at break are respectively defined as tensile strength S and tensile elongation E. It should be noted that the tensile strength S and tensile elongation E of the molded article are sometimes collectively called tensile properties.

The tensile strength S of the molded article is preferably 0.25 MPa or more, more preferably 0.30 MPa or more.

In this case, the molded article can exhibit excellent flexibility. From the same viewpoint, the tensile elongation E is more preferably 35% or more, even more preferably 40% or more.

The compressive stress at 50% strain of the molded article is preferably 50 to 300 kPa. In this case, the molded article can exhibit excellent strength while having flexibility. From such a viewpoint, the compressive stress at 50% strain of the molded article is more preferably 80 to 250 kPa, even more preferably 100 to 200 kPa.

The compressive stress at 50% strain of the molded article can be determined, for example, in the following manner. First, a test specimen having a length of 50 mm, a width of 50 mm, and a thickness of 25 mm is cut out from the center portion of the molded article so as not to include a skin layer present at the surface of the molded article. Then, the test specimen is subjected to a compression test at a compression rate of 10 mm/min on the basis of JIS K6767:1999 to determine the compressive stress at 50% strain of the molded article.

The molded article obtained using the expanded beads according to the present disclosure contains a polyethylene component recovered from waste such as used films, and is therefore excellent in environmental friendliness. Further, the molded article exhibits excellent flexibility and surface smoothness. Thus, the molded article exhibits excellent shock absorbability and surface protectiveness and is therefore suitable as a shock-absorbing packing material. Particularly, the molded article can be used also as a packing material for electric/electronic devices.

Examples

Hereinbelow, examples and comparative examples of the expanded bead and the molded article will be described. It should be noted that the present invention is not limited by the following examples.

In the examples and the comparative examples, virgin polyethylenes (vPE1 to vPE4) shown in Table 1 and recycled polyethylenes (rPE1 to rPE4) shown in Table 2 were used. The recycled polyethylenes are PCR materials recovered from film products.

In the examples and the comparative examples, the recycled polyethylenes were used in the form of pellets obtained by melt-kneading discarded used polyethylene films and granulating a resulting melt-kneaded material by UWC (i.e., underwater cutting). The recycled polyethylene pellets had a semi-transparent to white external appearance and a spherical shape.

In Table 1 and Table 2, the composition and physical properties of each of the virgin polyethylenes and the recycled polyethylenes and the type of catalyst used for polymerization are shown. The "LLD content (wt%)" of each of the recycled polyethylenes represents the content of an LLD component in the recycled polyethylene when a resin component constituting the recycled polyethylene is taken as 100 wt%. Abbreviations in Table 1 and Table 2 are as follows. "vPE" stands for virgin polyethylene. "rPE" stands for recycled polyethylene. "LLD" stands for linear low-density polyethylene (PE-LLD). "LD" stands for low-density polyethylene (PE-LD).

· Melting point

The melting point of each of the virgin polyethylenes and the recycled polyethylenes was measured by a testing method for transition temperature of plastic specified in JIS K7121: 1987. First, pellets of the linear low-density polyethylene (A1) were prepared as a test specimen. In accordance with "(2) Case where a melting temperature is measured after certain heat treatment is performed", 2 mg of the test specimen was conditioned by heating from 30°C to 200°C at a heating rate of 10°C/min and then cooling to 30°C at a cooling rate of 10°C/min. Then, differential scanning calorimetry was performed by heating from 30°C to 200°C at a heating rate of 10°C/min to obtain a DSC curve. The peak temperature of an endothermic peak in the obtained DSC curve was defined as a melting point. It should be noted that a heat-flux differential scanning calorimeter "DSC7020" manufactured by Hitachi High-Tech Science Corporation was used as a measurement device.

· Heat of fusion

The heat of fusion of each of the virgin polyethylenes and the recycled polyethylenes was measured on the basis of JIS K7122:2012 using a heat-flux differential scanning calorimeter. First, in accordance with "Case where heat of fusion is measured after certain heat treatment is performed", a test specimen was conditioned at a heating rate of 10°C/min and a cooling rate of 10°C/min. Then, heat-flux DSC (i.e., differential scanning calorimetry) was performed by setting a heating rate to 10°C/min to obtain a DSC curve. The value of heat of fusion was determined on the basis of the obtained DSC curve. It should be noted that an example of DSC curve of vPE1 is shown in Fig. 1. As shown in Fig. 1, the heat of fusion is represented by the area of a region (a shaded area in Fig. 1) surrounded by the DSC curve and a straight line drawn to connect a point $\alpha$ at 80°C on the DSC curve to a point $\beta$ at a melting end temperature Te on the DSC curve. It should be noted that a heat-flux differential scanning calorimeter "DSC7020" manufactured by Hitachi High-Tech Science Corporation was used as a measurement device. The flow rate of nitrogen gas during DSC measurement was set to 30 milliliters/min.

· MFR

The MFR of each of the virgin polyethylenes (A) and the recycled polyethylenes (B) was measured under conditions of a temperature of 190°C and a load of 2.16 kg in accordance with JIS K7210-1:2014.

· Content of antioxidant

The content of an antioxidant contained as an additive in each of the recycled polyethylenes (B) was measured by gas chromatograph mass spectrometry (GC/MS), field desorption/ionization mass spectrometry (FD/MS), and liquid chromatography analysis (HPLC). It should be noted that the antioxidant is one of additives generally added for film applications.

A measurement sample was obtained by pretreatment performed in the following manner. First, pellets of the recycled polyethylene (B) were frozen and pulverized and subjected to soxhlet extraction using chloroform as a solvent, and an extract was concentrated and subjected to reprecipitation using acetone. A resultant was filtered, and a filtrate was concentrated and diluted to a certain volume. The thus obtained measurement sample was subjected to GC/MS, FD/MS, and HPLC. The content of an antioxidant in the recycled polyethylene (B) was determined by comparison with the peak intensity of a reference sample. It should be noted that as a GC/MS measurement device, "JMS-Q1500GC" manufactured by JEOL Ltd. was used, as an FD/MS measurement device, "JMS-T100GCV" manufactured by JEOL Ltd. was used, and as an HPLC measurement device, "EXTREMA" manufactured by JASCO Corporation was used.

From all the recycled polyethylenes, stearyl 3-(3,5-di-tert-butyl-4-hydroxyphenyl)propionate and pentaerythritol tetrakis[3 -(3',5'-di-tert-butyl-4'-hydroxyphenyl)propionate] were detected as phenol-based antioxidants. Further, tris(2,4-tert-butylphenyl)phosphite was detected as a phosphite-based antioxidant. The total content (parts by weight) of antioxidants per 100 parts by weight of the resin in each of the recycled polyethylenes (B) is shown in Table 2.

[Examples 1 to 5, Comparative Examples 1 to 4]

(Production of resin particles)

Pellets of virgin polyethylene, pellets of recycled polyethylene, and a cell controlling agent were supplied to an extruder. The mixing ratio between the virgin polyethylene and the recycled polyethylene is as shown in Table 3. The amount of the cell controlling agent added is 0.02 parts by mass per 100 parts by mass of the total of the virgin polyethylene and the recycled polyethylene. The cell controlling agent was zinc borate. Specifically, zinc borate 2335 manufactured by Tomita Pharmaceutical Co., Ltd. was used. In the extruder, the virgin polyethylene, the recycled polyethylene, and the cell controlling agent were melt-kneaded to obtain a melted resin (i.e., a mixed resin). Then, the melted resin in the extruder was extruded into a strand through a slit of a die. The extruded strand was cooled in water and cut by a pelletizer to obtain resin particles each having a mass of 1.6 mg. It should be noted that the ratio of length L to diameter D (L/D) of the resin particles was set to 1.8.

In Table 3, "vLLD : rLLD : rLD" refers to the weight ratio among a polyethylene component derived from virgin linear low-density polyethylene (vLLD), a polyethylene component derived from linear low-density polyethylene (rLLD) of recycled polyethylene, and a polyethylene component derived from low-density polyethylene of recycled polyethylene (provided that the total of vLLD, rLLD, and rLD is taken as 100 wt%) in the resin particles.

(Production of first-step expanded beads)

In an autoclave having an inner capacity of 5 L, 3 liters of water as a dispersion medium and 1 kg of the resin particles were placed. Then, 0.3 parts by mass of mica as a dispersing agent and 0.03 parts by mass (as an active ingredient) of an aqueous sodium dodecylbenzenesulfonate solution as a surfactant were further added to the autoclave. As the mica, A-11 manufactured by YAMAGUCHI MICA CO., LTD. was used, and as the aqueous sodium dodecylbenzenesulfonate solution, NEOGEN (registered trademark) S-20F manufactured by DKS Co., Ltd. was used.

The contents in the autoclave were heated to an expansion temperature shown in Table 3 with stirring while carbon dioxide as a physical blowing agent was charged under pressure into the autoclave until an equilibrium pressure shown in Table 3 was achieved to impregnate the resin particle with the blowing agent. Then, the inside of the autoclave was maintained at the expansion temperature for 10 minutes, and the autoclave was then opened to release the contents to atmospheric pressure, so that the resin particles were expanded to obtain first-step expanded beads (first expanding step). The expansion temperature is shown in Table 3. It should be noted that in Table 3, "(G)" stands for gauge pressure.

The bulk density of the first-step expanded beads was measured in the following manner. The measurement was performed on first-step expanded beads that had been conditioned by being left to stand for 2 days in an atmosphere having a temperature of 23°C, a relative humidity of 50%, and an atmospheric pressure of 1 atm. First-step expanded beads were randomly selected from a group of first-step expanded beads after conditioning, and a measuring cylinder having a capacity of 1 L was filled with a large number of the first-step expanded beads up to the 1-liter mark in a natural accumulation state. The bulk density of the first-step expanded beads was determined by measuring a mass W2 [g] of the first-step expanded beads filled in the measuring cylinder, dividing the mass W2 by a volume V2 of the measuring cylinder (i.e., 1 liter) (W2/V2), and converting the unit to [kg/m$^3$]. The results are shown in Table 3.

(Production of second-step expanded beads)

Then, a second expanding step was performed to produce second-step expanded beads from the first-step expanded beads. First, the first-step expanded beads were impregnated with compressed air in a pressure vessel to increase the internal pressure of the expanded beads to a value shown in Table 3. The first-step expanded beads to which internal pressure had been applied were filled into a pressurized expanding machine and then further expanded by heating with steam having a pressure (gauge pressure) shown in Table 3 (second expanding step). In this way, second-step expanded beads were obtained. It should be noted that the content of insoluble matter obtained by the hot xylene extraction method in the second-step expanded beads was 0. The measurement results are shown in Table 3.

· Bulk density

The bulk ratio of the second-step expanded beads was measured in the same manner as described with reference to the first-step expanded beads.

· Bulk ratio

The bulk ratio [times] of the second-step expanded beads was determined by dividing the density [kg/m$^3$] of the base resin constituting the expanded beads by the bulk density [kg/m$^3$] of the second-step expanded beads.

· Average cell diameter

The expanded bead was divided into almost equal halves, and an enlarged photograph of the entire cut surface was taken using a microscope such as a scanning electron microscope. In the enlarged cross-sectional photograph, four line segments were drawn equiangularly (45°) from the outermost surface of the expanded bead to the outermost surface on the opposite side so as to pass through the center, and the number of cells intersecting these line segments was measured. The total length of the four line segments was divided by the total number of cells intersecting the line segments to calculate the cell diameter of the expanded bead. The same operation was performed on 20 expanded beads, and an arithmetic average of cell diameters of the expanded beads was calculated and defined as an average cell diameter.

· Closed cell content

The closed cell content of the expanded beads was measured using an air comparison pycnometer on the basis of Procedure C of ASTM-D2856-70. Specifically, the closed cell content of the expanded beads was determined in the following manner. Expanded beads having a bulk volume of about 20 cm$^3$ after conditioning were prepared as a measurement sample, and an apparent volume Va was accurately measured by an ethanol immersion method as described below. The measurement sample whose apparent volume Va was measured was sufficiently dried, and then a true volume value Vx of the measurement sample was measured with Beckman Model 1000 Air Comparison Pycnometer manufactured by Tokyo-Science Co., Ltd. in accordance with Procedure C described in ASTM-D2856-70. Then, on the basis of these volume values Va and Vx, the closed cell content was calculated by the following formula (2), and the average of 5 samples (N = 5) was determined as a closed cell content of the expanded beads.

$$\text{Closed cell content (\%)} = (Vx - W/\rho) \times 100/(Va - W/\rho) \cdots (2)$$

In the above formula,

Vx represents the true volume of the expanded beads measured by the above-described method, that is, the sum (unit: cm$^3$) of the volume of the resin constituting the expanded beads and the total volume of closed cell portions in the expanded beads,

Va represents the apparent volume (unit: $cm^3$) of the expanded beads measured from an increase in liquid level when the expanded beads are immersed in ethanol contained in a measuring cylinder,

W represents the weight (unit: g) of the expanded beads as a measurement sample, and

$\rho$ represents the density (unit: $g/cm^3$) of the resin constituting the expanded beads.

· Heat of high temperature peak

The heat of high temperature peak of the expanded beads (specifically, the second-step expanded beads) was measured by the above-described method. Specifically, heat-flux DSC was performed using about 2 mg of expanded beads, and the peak area of a high-temperature peak in an obtained DSC curve was defined as heat of high temperature peak of the expanded beads. In the heat-flux DSC, a measurement start temperature was set to 30°C, a measurement end temperature was set to 200°C, and a heating rate was set to 10°C/min. As a measurement device, a heat-flux differential scanning calorimeter (manufactured by Hitachi High-Tech Science Corporation, model number: DSC7020) was used.

· Evaluation of moldable range

The expanded beads of each of Examples and Comparative Examples were subjected to in-mold molding by a method described in "· In-mold molding by changing a molding pressure in increments of 0.01 MPa" described later to experimentally prepare molded articles by changing a molding pressure in increments of 0.01 MPa in the range of 0.07 to 0.12 MPa (G). A moldable range was evaluated according to the following criteria. The results are shown in Table 3.

3: Three or more molding pressures at which an acceptable product can be molded are present in the range of 0.07 to 0.12 MPa (G).
2: Two molding pressures at which an acceptable product can be molded are present in the range of 0.07 to 0.12 MPa(G).
1: One molding pressure at which an acceptable product can be molded is present in the range of 0.07 to 0.12 MPa(G).
0: No molding pressure at which an acceptable product can be molded is present in the range of 0.07 to 0.12 MPa(G).

It should be noted that an evaluation score of 1 or more is acceptable and an evaluation score of 0 is rejectable.

· In-mold molding by changing molding pressure in increments of 0.01 MPa

In accordance with a method described later in "(Production of expanded beads molded article)", molded articles were produced by molding by changing a molding pressure (specifically, a molding steam pressure) in increments of 0.01 MPa between 0.07 to 0.12 MPa (G). The molded articles were demolded and then aged by being left to stand in an oven adjusted to 80°C for 12 hours. The molded articles after aging were conditioned by being left to stand for 24 hours in an atmosphere having a relative humidity of 50%, a temperature of 23°C, and an atmospheric pressure of 1 atm. Then, the secondary expandability, fusion bondability, and recoverability of the molded articles were evaluated on a scale of one to five according to the following criteria. Each of the evaluation items is regarded as acceptable when rated as 5. The steam pressure at which a molded article regarded as acceptable in terms of all the evaluation items was obtained was defined as the above-described molding pressure at which an acceptable product can be molded. When the lower limit of the moldable steam pressure is lower, the moldable molding heating temperature is lower, that is, moldability is more excellent. Further, when the range from the lower limit to the upper limit of the moldable steam pressure is wider, the range of the moldable molding heating temperature is wider, that is, moldability is more excellent.

· Secondary expandability

A rectangle of 100 mm × 100 mm was drawn in the center portion of the expanded beads molded article, and then a diagonal line was drawn from any one of corners of the rectangle. The number of voids (i.e., gaps between expanded beads) that were formed to overlap the diagonal line and were larger than a 1-mm square was counted. On the basis of the number of voids, secondary expandability was evaluated on a scale of one to five according to the following criteria.

5: The number of voids is less than 5.
4: The number of voids is 5 or more and less than 10.
3: The number of voids is 10 or more and less than 15.

2: The number of voids is 15 or more and less than 20.

1: The number of voids is 20 or more.

· Fusion bondability

The molded article was broken by bending it almost in half in the longitudinal direction. The exposed fracture surface was visually observed to count the number of expanded beads separated at their interfaces and the number of expanded beads fractured per se. Then, the ratio of the number of expanded beads fractured per se to the total number of expanded beads present in the exposed surface, that is, the total of the number of expanded beads separated at their interfaces and the number of expanded beads fractured per se was calculated. A value obtained by expressing this ratio in percentage (%) was defined as a fusion-bonding rate. On the basis of the fusion-bonding rate, fusion bondability was evaluated on a scale of one to five according to the following criteria.

5: The fusion-bonding rate is 80% or more.

4: The fusion-bonding rate is 60% or more and less than 80%.

3: The fusion-bonding rate is 40% or more and less than 60%.

2: The fusion-bonding rate is 20% or more and less than 40%.

1: The fusion-bonding rate is less than 20%.

· Recoverability

The presence or absence of a sink mark, that is, a central area depressed lower than a surrounding area in the expanded beads molded article was evaluated. Specifically, the thicknesses of the obtained molded article were measured at its center and four corners, and the ratio of the thickness at the center to the thickness at the corner having the largest thickness among the four corners was calculated. On the basis of the thickness ratio, recoverability was evaluated on a scale of one to five according to the following criteria.

5: The thickness ratio is 99% or more.

4: The thickness ratio is 98% or more and less than 99%.

3: The thickness ratio is 96% or more and less than 98%.

2: The thickness ratio is 90% or more and less than 96%.

1: The thickness ratio is less than 90%.

(Production of expanded beads molded article)

First, the second-step expanded beads obtained in the second expanding step were dried at 23°C for 24 hours. Then, the second-step expanded beads were filled in a flat plate mold (specifically, in a mold having a flat plate-shaped cavity) whose cracking size was adjusted to 20% (specifically, 8 mm) without applying internal pressure to the second-step expanded beads (i.e., the internal pressure was 0). The mold has a length of 200 mm, a width of 65 mm, and a thickness of 40 mm. Then, the mold was clamped, and steam was supplied for 5 seconds in a state where drain valves at both surfaces of the mold were opened to perform preheating. Then, steam of 0.01 MPa (G) was supplied from one of the surfaces of the mold to perform one-direction heating. Then, steam of 0.01 MPa (G) was supplied from the other surface of the mold to perform one-direction heating, and then heating was performed for 8 seconds with steam having a molding pressure shown in Table 3. The heating for 8 seconds is main heating. After the completion of the main heating, the pressure was released, water cooling was performed until the value of a surface pressure meter attached to the inner surface of the mold was reduced to 0.02 MPa (G), and then a molded article was demolded. The molded article was aged by being left to stand for 12 hours in an oven at 80°C. The molded article was conditioned by being left to stand for 24 hours under conditions of a relative humidity of 50%, a temperature of 23°C, and an atmospheric pressure of 1 atm. In this way, a molded article was produced. Then, the density, tensile strength, tensile elongation, and compressive stress at 50% strain of the molded article were measured in the following manner, and the surface smoothness of the molded article was evaluated. The measurement results and evaluation results are shown in Table 3.

· Density of molded article

The density ($kg/m^3$) of the molded article was calculated by dividing the weight (g) of the molded article by the volume (L) of the molded article determined from the external dimensions of the molded article and by performing unit conversion.

· Tensile strength and tensile elongation

The tensile strength S and tensile elongation E of the molded article were determined in accordance with JIS K6767:1999. First, a cut-out piece of 120 mm × 25 mm × 10 mm was cut out from the molded article to have cut-out surfaces as its all surfaces with the use of a vertical slicer. A No. 1 dumbbell test specimen was prepared from the cut-out piece with the use of a jig saw. Then, the test specimen was subjected to a tensile test at a tensile speed of 500 mm/min. The thus measured maximum tensile stress under tension and elongation at break were respectively defined as tensile strength S and tensile elongation E.

· Compressive stress at 50% strain

A test specimen having a length of 50 mm, a width of 50 mm, and a thickness of 25 mm was cut out from the center portion of the molded article so as not to include a skin layer present at the surface of the molded article. Then, the test specimen was subjected to a compression test at a compression rate of 10 mm/min on the basis of JIS K6767:1999 to determine the compressive stress at 50% strain of the molded article. It should be noted that the density of the test specimen used to measure the compressive stress at 50% strain was determined by the same method as used to measure the density of the molded article. The density of the test specimen is shown as "Density of cut-out molded article" in Table 3.

(Surface smoothness)

The surface of the molded article was observed, and the surface property of the molded article was evaluated according to the following criteria.

A: The molded article has an excellent surface state such that there is almost no gap between beads in the surface of the molded article and irregularities resulting from mold transfer, molding marks, and the like are not conspicuous.
B: Gaps between beads or irregularities resulting from mold transfer, molding marks, and the like are slightly observed in the surface of the molded article.
C: Gaps between beads or irregularities resulting from mold transfer, molding marks, and the like are observed in the surface of the molded article.

[Table 1]

(Table 1)

| Virgin polyethylene | vPE1 | vPE2 | vPE3 | vPE4 |
|---|---|---|---|---|
| Type of resin | LLD | LLD | LLD | LLD |
| Catalyst | Metallocene | Metallocene | Ziegler-Natta | Ziegler-Natta |
| Type of comonomer | 1-Hexene | 1-Hexene | 1-Octene | 4-Methyl-1-pentene |
| Number of carbon atoms of comonomer | 6 | 6 | 8 | 6 |
| Density of resin (g/cm$^3$) | 0.920 | 0.922 | 0.926 | 0.927 |
| Melting point (°C) | 124 | 120 | 122 | 122 |
| Heat of fusion (J/g) | 83 | 87 | 103 | 104 |
| MFR:Iv (g/10 min) | 1.1 | 1.4 | 1.0 | 2.3 |

[Table 2]

(Table 2)

| Recycled polyethylene | rPE1 | rPE2 | rPE3 | rPE4 |
|---|---|---|---|---|
| Type | PCR material derived from film products | PCR material derived from film products | PCR material derived from film products | PCR material derived from film products |
| Type of resin | LLD + LD | LLD + LD | LLD + LD | LLD |
| Catalyst of LLD (B1) | Ziegler-Natta | Ziegler-Natta | Ziegler-Natta | Ziegler-Natta |
| Comonomer of LLD (B1) | 1-Butene, 1-Hexene | 1-Butene, 1-Hexene | 1-Butene, 1-Hexene | 1-Butene, 1-Hexene |
| Density of resin (g/cm$^3$) | 0.924 | 0.925 | 0.926 | 0.927 |
| Melting point (°C) | 121 | 124 | 124 | 124 |
| Heat of fusion (J/g) | 75 | 83 | 85 | 95 |
| MFR:Ir (g/10 min) | 1.0 | 1.2 | 1.7 | 2.0 |
| Content of LLD (B1) (wt%) | 50 | 60 | 75 | 100 |
| Content of antioxidant (parts by weight) | 0.09 | 0.08 | 0.06 | 0.03 |

[Table 3]

(Table 3)

| Examples, Comparative Examples | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Resin particles | Virgin polyethylene | - | vPE1 | vPE1 | vPE2 | vPE1 | vPE1 | vPE3 | vPE4 | vPE1 | - |
| | Content | wt% | 75 | 50 | 50 | 75 | 75 | 50 | 50 | 75 | - |
| | Recycled polyethylene | - | rPE1 | rPE1 | rPE1 | rPE2 | rPE3 | rPE1 | rPE1 | rPE4 | rPE1 |
| | Content | wt% | 25 | 50 | 50 | 25 | 25 | 50 | 50 | 25 | 100 |
| | vLLD : rLLD : rLD | - | 75 : 13 : 13 | 50 : 25 : 25 | 50 : 25 : 25 | 75 : 15 : 10 | 75 : 19 : 6 | 50 : 25 : 25 | 50 : 25 : 25 | 75 : 25 : 0 | 0 : 50 : 50 |
| | lr-lv | g/10 min | -0.1 | -0.1 | -0.4 | 0.1 | 0.6 | 0 | -1.3 | 0.9 | - |
| First-step expanded beads | Expansion temperature | °C | 121.0 | 120.5 | 118.2 | 121.0 | 121.0 | 122.0 | 121.0 | 121.0 | 121.0 |
| | Equilibrium pressure | MPa(G) | 4.1 | 4.0 | 3.8 | 4.2 | 4.35 | 4.0 | 4.1 | 4.35 | 4.0 |
| | Bulk density | kg/m$^3$ | 49 | 48 | 58 | 51 | 50 | 62 | 66 | 62 | 51 |

EP 4 400 539 A1

(continued)

| Examples, Comparative Examples | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Second-step expanded beads | Internal pressure | MPa (G) | 0.55 | 0.50 | 0.55 | 0.55 | 0.60 | 0.55 | 0.55 | 0.65 | 0.55 |
| | Steam pressure | MPa (G) | 0.05 | 0.04 | 0.04 | 0.06 | 0.07 | 0.06 | 0.07 | 0.08 | 0.06 |
| | Heating time | sec | 15 | 15 | 15 | 15 | 15 | 10 | 15 | 15 | 15 |
| | Bulk density | kg/m$^3$ | 18.5 | 21.5 | 18.5 | 18.5 | 19.3 | 19.1 | 23.1 | 20.6 | 26.4 |
| | Bulk ratio | times | 50.0 | 43.0 | 50.0 | 50.0 | 48.0 | 48.5 | 40.0 | 45.0 | 35.0 |
| | Average cell diameter | $\mu$m | 62 | 60 | 132 | 63 | 58 | 170 | 156 | 58 | 160 |
| | Closed cell content | % | 92 | 90 | 94 | 93 | 91 | 95 | 93 | 92 | 80 |
| | Heat of high temperature peak | J/g | 20.5 | 20.0 | 19.0 | 21.0 | 20.8 | 30.0 | 25.0 | 22.0 | 20.0 |
| Evaluation of moldability | Moldable range | MPa(G) | 0.10 to 0.11 | 0.09 to 0.10 | 0.07 to 0.09 | 0.10 to 0.11 | 0.11 | 0.11 to 0.12 | None | None | None |
| | Evaluation | - | 2 | 2 | 3 | 2 | 1 | 2 | 0 | 0 | 0 |

(continued)

| Examples, Comparative Examples | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Molded article | Internal pressure | MPa(G) | 0 | 0 | 0 | 0 | 0 | 0 | 0 | 0 | 0 |
| | Molding pressure | MPa(G) | 0.10 | 0.09 | 0.07 | 0.10 | 0.11 | 0.11 | Not evaluated | Not evaluated | Not evaluated |
| | Density of molded article | kg/m$^3$ | 25 | 28.5 | 25.7 | 25.3 | 26.4 | 25.7 | | | |
| | Tensile strength S | MPa | 0.33 | 0.36 | 0.28 | 0.35 | 0.38 | 0.21 | | | |
| | Tensile elongation E | % | 43 | 46 | 40 | 44 | 44 | 22 | | | |
| | S × E | MPa•% | 14.2 | 16.6 | 11.2 | 15.5 | 16.5 | 4.6 | | | |
| | Compressive stress at 50% strain | kPa | 116 | 128 | 95 | 124 | 132 | 105 | | | |
| | Density of cut-out molded article | kg/m$^3$ | 23.0 | 26.0 | 21.0 | 23.6 | 24.1 | 21.0 | | | |
| | Evaluation of surface smoothness | - | A | A | A | A | A | B | | | |

As can be seen from Table 1 to Table 3, the expanded beads of Examples 1 to 5 using, as a base resin, a mixed resin of predetermined virgin polyethylene and predetermined recycled polyethylene made it possible to produce, at a low pressure, expanded beads molded articles containing a relatively large amount of recycled polyethylene as a PCR material but having excellent surface smoothness.

The moldable ranges of Examples 1 to 4 were wider than that of Example 5. One of the reasons for this is considered to be that the difference [Ir - Iv] between the MFR of the virgin polyethylene (A) and the MFR of the recycled polyethylene (B) is within the range of -0.5 to 0.5 g/10 min. Further, another reason for this is considered to be that the content of the low-density polyethylene (B 1) in the recycled polyethylene (B) is relatively high.

Examples 1, 2, 4, and 5 were superior in tensile properties to Example 3 and were therefore excellent in flexibility. The reason for this is considered to be that the average cell diameter of the expanded beads is relatively small.

In Comparative Examples 1 and 2, linear low-density polyethylene obtained by polymerization using a Ziegler-Natta catalyst was used as virgin polyethylene. Therefore, the molding pressure in in-mold molding was slightly high, and the molded article was likely to be affected by the low-density polyethylene contained in the recycled polyethylene during molding. As a result, surface smoothness of the molded article deteriorated. Further, in Comparative Example 1, flexibility of the molded article deteriorated.

In Comparative Example 2, the difference in MFR between the virgin polyethylene and the recycled polyethylene was too large in addition to the fact that linear low-density polyethylene obtained by polymerization using a Ziegler-Natta catalyst was used, and therefore moldability was significantly bad, so that no acceptable product could be obtained at any molding pressure.

In Comparative Example 3, recycled polyethylene was used which was constituted from a polyethylene-based resin containing no low-density polyethylene and constituted from only linear low-density polyethylene. As a result, moldability was significantly bad, and no acceptable product could be obtained at any molding pressure. The reason for this is considered to be that elongation during molding is poor when waste-derived recycled polyethylene does not contain low-density polyethylene.

In Comparative Example 4, expanded beads were produced without using virgin polyethylene. That is, the base resin of the expanded beads of Comparative Example 4 is constituted from recycled polyethylene. Therefore, expandability was slightly poor, and the bulk ratio of the expanded beads was slightly low. Further, moldability was significantly bad, and no acceptable product could be obtained at any molding pressure.

**Claims**

1. A polyethylene-based resin expanded bead containing, as a base resin, a mixed resin of virgin polyethylene (A) and recycled polyethylene (B), wherein

   the mixed resin contains 40 wt% or more and 90 wt% or less of the virgin polyethylene (A) and 10 wt% or more and 60 wt% or less of the recycled polyethylene (B) (provided that a total content of both is 100 wt%),
   the virgin polyethylene (A) is linear low-density polyethylene (A1) obtained by polymerization using a metallocene-based polymerization catalyst and having a density of 0.915 $g/cm^3$ or more and less than 0.930 $g/cm^3$ and a melting point of 120°C or higher and 130°C or lower, and
   the recycled polyethylene (B) is a post-consumer material containing linear low-density polyethylene (B1) and low-density polyethylene (B2), the linear low-density polyethylene (B1) being contained as a main component.

2. The polyethylene-based resin expanded bead according to claim 1, wherein the recycled polyethylene (B) is a post-consumer material recovered from discarded films.

3. The polyethylene-based resin expanded bead according to claim 1 or 2, wherein the virgin polyethylene (A) has a heat of fusion of 80 J/g or more and 100 J/g or less.

4. The polyethylene-based resin expanded bead according to any one of claims 1 to 3, wherein the virgin polyethylene (A) has a melt flow rate of 0.8 g/10 min or more and 1.5 g/10 min or less as measured under conditions of a temperature of 190°C and a load of 2.16 kg.

5. The polyethylene-based resin expanded bead according to any one of claims 1 to 4, wherein a difference in a melt flow rate as measured under conditions of a temperature of 190°C and a load of 2.16 kg between the virgin polyethylene (A) and the recycled polyethylene (B) is -1.0 g/10 min or more and 1.0 g/10 min or less.

6. The polyethylene-based resin expanded bead according to any one of claims 1 to 5, wherein the recycled polyethylene (B) contains 50 wt% or more and 90 wt% or less of the linear low-density polyethylene (B1) and 10 wt% or more and 50 wt% or less of the low-density polyethylene (B2) with respect to 100wt% of the total of the linear low-density polyethylene (B1) and the low-density polyethylene (B2).

7. The polyethylene-based resin expanded bead according to any one of claims 1 to 6, wherein the recycled polyethylene (B) has a melting point of 115°C or higher and 130°C or lower and a density of 0.910 g/cm$^3$ or more and less than 0.930 g/cm$^3$.

8. The polyethylene-based resin expanded bead according to any one of claims 1 to 7, wherein the expanded bead has an average cell diameter of 50 $\mu$m or more and 180 $\mu$m or less.

9. The polyethylene-based resin expanded bead according to any one of claims 1 to 8, wherein in heat-flux differential scanning calorimetry of the expanded beads, a first DSC curve obtained by heating the expanded beads from 30°C to 200°C at a heating rate of 10°C/min has an intrinsic peak that is a melting peak intrinsic to the base resin and a high-temperature peak that is a melting peak appearing on a higher temperature side in comparison with the intrinsic peak, and a heat of fusion of the high-temperature peak is 15 J/g or more and 50 J/g or less.

10. The polyethylene-based resin expanded bead according to any one of claims 1 to 9, wherein the expanded bead has a bulk density of 10 to 30 kg/m$^3$.

11. A method for producing a polyethylene-based resin expanded bead, the method including:

   a dispersing step in which polyethylene-based resin particles containing, as a base resin, a mixed resin containing 40 wt% or more and 90 wt% or less of virgin polyethylene (A) and 10 wt% or more and 60 wt% or less of recycled polyethylene (B) (provided that a total content of both is 100 wt%) are dispersed in a dispersion medium in a sealed container;
   a blowing agent impregnating step in which the resin particles are impregnated with an inorganic physical blowing agent in the sealed container; and
   an expanding step in which the resin particles impregnated with the blowing agent are released from the sealed container into an atmosphere having a pressure lower than an internal pressure of the sealed container to expand the resin particles, wherein
   the virgin polyethylene (A) is linear low-density polyethylene (A1) obtained by polymerization using a metallocene-based polymerization catalyst and having a density of 0.915 g/cm$^3$ or more and less than 0.930 g/cm$^3$ and a melting point of 120°C or higher and 130°C or lower, and
   the recycled polyethylene (B) is a post-consumer material containing linear low-density polyethylene (B 1) and low-density polyethylene (B2), the linear low-density polyethylene (B1) being contained as a main component.

12. The method for producing a polyethylene-based resin expanded bead according to claim 11, wherein the recycled polyethylene (B) is a post-consumer material recovered from discarded films.

FIG. 1

FIG. 2

## INTERNATIONAL SEARCH REPORT

International application No.

**PCT/JP2022/034282**

### A. CLASSIFICATION OF SUBJECT MATTER

*C08J 9/18*(2006.01)i; *B29C 44/00*(2006.01)i
FI: C08J9/18 CES; B29C44/00 ZAB

According to International Patent Classification (IPC) or to both national classification and IPC

### B. FIELDS SEARCHED

Minimum documentation searched (classification system followed by classification symbols)

C08J9/00-9/42; B29C44/00-44/60; B29C67/20; B29B17/00-17/04; C08J11/00-11/28; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2007-283576 A (KANEKA CORP) 01 November 2007 (2007-11-01)<br>claims 1, 6, paragraphs [0014], [0017], examples | 1-12 |
| A | JP 2008-265093 A (KANEKA CORP) 06 November 2008 (2008-11-06)<br>claim 1, paragraphs [0014], [0021], examples | 1-12 |
| A | JP 2007-203559 A (KANEKA CORP) 16 August 2007 (2007-08-16)<br>claim 1, paragraphs [0012], [0018], examples | 1-12 |
| A | JP 2002-003637 A (ASAHI KASEI CORP) 09 January 2002 (2002-01-09)<br>claims 1-2, 6, paragraph [0009], examples | 1-12 |
| A | JP 2013-045643 A (VISCAS CORP) 04 March 2013 (2013-03-04)<br>claim 1, paragraphs [0013], [0021]-[0027], examples | 1-12 |
| A | JP 10-505298 A (MERCK PATENT GMBH) 26 May 1998 (1998-05-26)<br>claims 1-4 | 1-12 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 400 539 A1

## INTERNATIONAL SEARCH REPORT
### Information on patent family members

International application No.

**PCT/JP2022/034282**

| Patent document cited in search report | | | Publication date (day/month/year) | Patent family member(s) | Publication date (day/month/year) |
|---|---|---|---|---|---|
| JP | 2007-283576 | A | 01 November 2007 | (Family: none) | |
| JP | 2008-265093 | A | 06 November 2008 | (Family: none) | |
| JP | 2007-203559 | A | 16 August 2007 | (Family: none) | |
| JP | 2002-003637 | A | 09 January 2002 | (Family: none) | |
| JP | 2013-045643 | A | 04 March 2013 | (Family: none) | |
| JP | 10-505298 | A | 26 May 1998 | US 5736585 A claims | |

Form PCT/ISA/210 (patent family annex) (January 2015)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013031745 A1
- WO 2014042189 A1
- JP 2005297464 A
- JP S4638359 B
- JP S5122951 B
- JP H0446217 B
- JP H0649795 B
- JP H0622919 B